# EUROPÄISCHE PATENTSCHRIFT

(11) **EP 1 722 994 B1**
(45) Veröffentlichungstag und Bekanntmachung des Hinweises auf die Patenterteilung: **23.04.2008**
(21) Anmeldenummer: 05715738.0
(22) Anmeldetag: 04.03.2005
(51) Int. Cl.: B60K 6/12, F16H 61/00, F16H 61/42, B60K 17/24

(54) **ANTRIEBSSYSTEM MIT GEMEINSAMEN ARBEITSDRUCKANSCHLUSS**
DRIVE SYSTEM HAVING A COMMON WORK PRESSURE CONNECTION
SYSTEME D'ENTRAINEMENT AVEC RACCORD DE PRESSION DE TRAVAIL COMMUNE

(30) Priorität: 09.03.2004 DE 102004011423; 10.09.2004 DE 102004043897
(43) Veröffentlichungstag der Anmeldung: 22.11.2006
(73) Patentinhaber: Brueninghaus Hydromatik GmbH, 89275 Elchingen (DE)
(72) Erfinder: DREHER, Herbert, 72160 Horb (DE); KREBS, Clemens, 72074 Tübingen (DE)
(74) Vertreter: Körfer, Thomas
(86) Internationale Anmeldenummer: PCT/EP2005/002309
(87) Internationale Veröffentlichungsnummer: WO 2005/087528

(56) Entgegenhaltungen:
- WO-A-03/046380
- US-A- 4 170 153
- US-A- 4 215 545
- US-A- 4 387 783
- US-A- 4 621 495
- US-A- 5 425 238

## Beschreibung

Die Erfindung betrifft ein Antriebssystem, insbesondere für Nutzfahrzeuge.

Zum Unterstützen der Betriebsbremse kommt bei Fahrzeugen häufig eine zusätzliche Bremsvorrichtung zum Einsatz, die auf den Antriebsstrang wirkt. Aus der WO 03/046380 A1 ist es bekannt, eine Welle des Antriebsstrangs durch eine Hohlwelle zu führen. Die Welle des Antriebsstrangs kann mit der Hohlwelle durch eine Kupplung kraftschlüssig verbunden werden. Die Hohlwelle selbst ist mit einer Zylindertrommel einer Axialkolbenmaschine verbunden. Das Verdrängungsvolumen der Axialkolbenmaschine ist einstellbar.

Um das Fahrzeug über die Axialkolbenmaschine abzubremsen, wird mittels der Kupplung die Antriebswelle des Antriebsstrangs mit der Hohlwelle mechanisch gekoppelt. Über die Hohlwelle wird damit die Axialkolbenmaschine angetrieben, und die Axialkolbenmaschine fördert als Pumpe ein Druckmittel in einen hydraulischen Speicher. Die somit in dem hydraulischen Speicher gespeicherte Energie kann genutzt werden, um im umgekehrten Fall, also einer beschleunigten Fahrt, über die Axialkolbenmaschine ein zusätzliches Antriebsmoment auf den Antriebsstrang zu übertragen. In diesem Zustand ist ebenfalls die Hohlwelle mit der Welle des Antriebsstrangs verbunden und die Axialkolbenmaschine wird auf einen entsprechenden Schwenkwinkel verstellt.

Zum Betätigen der Kupplung ist eine elektromagnetische Ansteuerung vorgesehen, welche auf ein Lager wirkt. Durch dieses Lager wird eine Drehbewegung eines Lagerrings in eine Hubbewegung umgewandelt. Diese Hubbewegung wirkt auf einen Kupplungskolben, der damit ein Paket von Lamellen der Kupplung mit einer axialen Kraft beaufschlagt und so die beiden Wellen kraftschlüssig miteinander verbindet.

Die beschriebene Betätigung hat den Nachteil, dass durch die Verwendung eines Elektromagneten zum Einrücken der Kupplung ein Elektromagnet erforderlich ist, der kräftig genug ist, um eine aufgrund der hohen wirkenden Drehmomente erforderliche große axiale Kraft auf die Lamellen der Kupplung auszuüben. Solche Elektromagnete sind schwer und benötigen zudem einen erheblichen Bauraum. Ferner benötigen sowohl die Axialkolbenmaschine zur Verstellung der Schwenkscheibe als auch die Kupplung eine separate Energieversorgung.

Ein weiterer Nachteil ist es, dass eine zusätzliche Ansteuerung in Notsituationen, also beispielsweise dem Ausfall des Betätigungsmagneten, nicht vorgesehen werden kann.

Der Erfindung liegt die Aufgabe zugrunde, ein Antriebssystem mit einer hydrostatischen Kolbenmaschine zum Speichern und anschließenden Nutzen von Bremsenergie zu schaffen, bei dem eine Kupplung und eine Verstelleinrichtung der Kolbenmaschine hydraulisch betätigbar sind und ein gemeinsamer hydraulischer Anschluß verwendet wird.

Die Aufgabe wird durch das erfindungsgemäße Antriebssystem mit den Merkmalen des Anspruchs 1 gelöst.

Bei dem erfindungsgemäßen Antriebssystem ist eine erste Triebwelle mit einer zweiten Triebwelle durch eine Kupplung verbindbar. Mit der zweiten Triebwelle ist permanent eine hydrostatische Kolbenmaschine drehfest verbunden. Bei Betätigung der Kupplung wird die hydrostatische Kolbenmaschine mechanisch an die erste Triebwelle gekoppelt. Die Kolbenmaschine ist in ihrem Verdrängungsvolumen einstellbar. Sowohl die Verstellung des Verdrängungsvolumens der hydrostatischen Kolbenmaschine als auch die Betätigung der Kupplung erfolgen hydraulisch. Der zur Betätigung der Kupplung sowie für die Verstelleinrichtung erforderliche Druck wird der Kupplung und der Verstelleinrichtung über einen gemeinsamen Steuerdruckanschluss zugeführt. Damit kann ein zusätzliches Element, welches die axiale Kraft auf die Kupplung erzeugt und das unabhängig von der Verstelleinrichtung mit einer hohen elektrischen Energie versorgt werden muss, entfallen.

Die Unteransprüche betreffen vorteilhafte Weiterbildungen des erfindungsgemäßen Antriebssystems.

Insbesondere ist es vorteilhaft, zum Beaufschlagen einer Kupplungskolbenfläche mit einer hydraulischen Kraft eine interne Verbindung zwischen dem Steuerdruckanschluss und der Kupplung vorzusehen. Eine solche interne Verbindung, die in der Wand des Gehäuses der hydrostatischen Kolbenmaschine verläuft, erfordert keine zusätzlich an der Außenseite des Gehäuses verlegten druckfesten Leitungen. Damit wird nicht nur die Kompaktheit der gesamten Kolbenmaschine verbessert, sondern auch eine mögliche Beschädigung der druckführenden Leitungen verhindert.

Weiterhin erfolgt die Betätigung der Kupplung vorzugsweise über ein Kupplungsventil. Durch dieses Kupplungsventil wird der über den Steuerdruckanschluss zugeführte hydraulische Druck an die Kupplungskolbenfläche weitergeleitet. Die Verwendung eines solchen Kupplungsventils ermöglicht das Schalten hoher Drücke und damit das Aufbringen hoher Kräfte zur Betätigung der Kupplung, wobei aufgrund der niedrigen erforderlichen Volumenströme dennoch ein lediglich geringes Bauvolumen für das Ventil erforderlich ist.

Gemäß einer weiteren bevorzugten Ausführungsform ist zusätzlich ein pneumatisch-hydraulischer Wandler vorgesehen. Durch den pneumatisch-hydraulischen Wandler kann über eine pneumatische Druckquelle mittelbar ein hydraulischer Druck erzeugt werden, der auf die Kupplungskolbenfläche wirkt. Dadurch ist auch bei einem erstmaligen Start, wenn noch kein hydraulischer Druck aufgebaut ist, eine Betätigung der Kupplung möglich, um die Pumpe erstmalig einzukuppeln, und auch bei Abfall des Drucks an dem Steuerdruckanschluss ist noch eine Betätigung der Kupplung möglich.

Um in solchen Notsituationen gleichzeitig auch die Verstellung der hydrostatischen Kolbenmaschine sicherzustellen, kann der Ausgang des pneumatisch-hydraulischen Wandlers auch mit dem Steuerdruckanschluss verbunden werden. Der über den pneumatisch-hydraulischen Wandler erzeugte hydraulische Druck steht dann an dem Steuerdruckanschluss sowohl der Kupplungsbetätigung als auch der Verstelleinrichtung der hydrostatischen Kolbenmaschine gleichermaßen zur Verfügung.

Ein bevorzugtes Ausführungsbeispiel des erfindungsgemäßen Antriebssystems ist in der Zeichnung dargestellt und wird in der nachfolgenden Beschreibung näher erläutert. Es zeigen:
- Fig. 1: einen hydraulischen Schaltplan eines ersten Ausführungsbeispiels des erfindungsgemäßen Antriebssystems;
- Fig. 2: eine vereinfachte Darstellung einer hydrostatischen Kolbenmaschine des ersten Ausführungsbeispiels eines erfindungsgemäßen Antriebssystems;
- Fig. 3: einen Ausschnitt des hydraulischen Schaltplans mit einer ersten alternativen Anordnung der Kupplung;
- Fig. 4: einen Ausschnitt des hydraulischen Schaltplans mit einer zweiten alternativen Anordnung der Kupplung;
- Fig. 5: einen hydraulischen Schaltplan eines zweiten Ausführungsbeispiels des erfindungsgemäßen Antriebssystems und
- Fig. 6: einen hydraulischen Schaltplan eines dritten Ausführungsbeispiels des erfindungsgemäßen Antriebssystems.

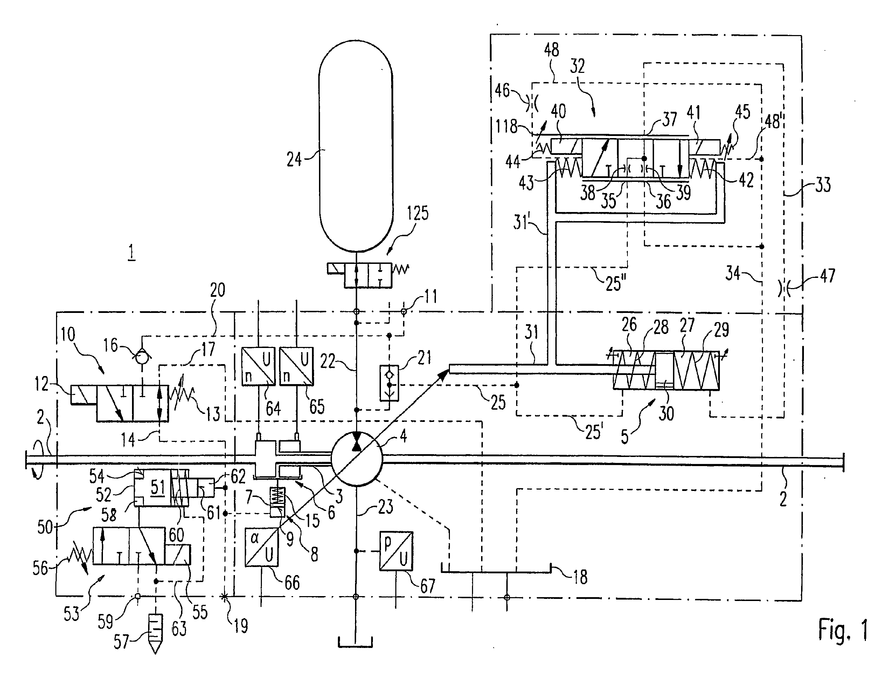

Fig. 1 zeigt ein erfindungsgemäßes Antriebssystem 1. Das erfindungsgemäße Antriebssystem 1 kann insbesondere ein Teil eines Antriebsstrangs eines Nutzfahrzeugs sein. Das Antriebssystem 1 umfasst eine erste Triebwelle 2 und eine zweite Triebwelle 3. Die erste Triebwelle 2 ist z. B. mit einer Ausgangswelle eines Schaltgetriebes einerseits und andererseits mit einem Achsantrieb verbunden.

Die zweite Triebwelle 3 ist als Hohlwelle ausgeführt und läuft frei auf der ersten Triebwelle 2. Die zweite Triebwelle 3 ist fest mit einer Zylindertrommel einer hydrostatischen Kolbenmaschine 4 verbunden. Die hydrostatische Kolbenmaschine 4 kann sowohl als Pumpe als auch als Motor betrieben werden und ist in ihrem Verdrängungsvolumen einstellbar. Unter dem Begriff Verdrängungsvolumen ist beim Betrieb der hydrostatischen Kolbenmaschine 4 als Motor auch das Schluckvolumen zu verstehen. Der einfacheren Darstellung wegen wird nachfolgend lediglich der Begriff Verdrängungsvolumen verwendet. Zur Verstellung der hydrostatischen Kolbenmaschine 4 ist eine Verstelleinrichtung 5 vorgesehen, die auf eine aus ihrer Neutrallage in beide Richtungen ausschwenkbare Schwenkscheibe der hydrostatischen Kolbenmaschine 4 wirkt.

Um zwischen der ersten Triebwelle 2, die mit dem Antriebsstrang des Fahrzeugs verbunden ist, und der hydrostatischen Kolbenmaschine 4 ein Drehmoment übertragen zu können, sind die erste Triebwelle 2 und die zweite Triebwelle 3 über eine Kupplung 6 mechanisch koppelbar. Zur Betätigung der Kupplung 6 dient ein mit einem hydraulischen Druck beaufschlagbarer Kupplungskolben 7, der in einem Kupplungszylinder 8 angeordnet ist. Zum Beaufschlagen mit dem hydraulischen Druck ist an dem Kupplungskolben 7 eine Kupplungskolbenfläche 9 ausgebildet, die zusammen mit dem Kupplungszylinder 8 einen Druckraum ausbildet.

Zum Betätigen der Kupplung 6 wird die Kupplungskolbenfläche 9 entweder mit einer hydraulischen Kraft beaufschlagt oder entlastet. Hierzu ist ein Kupplungsventil 10 vorgesehen. Das Kupplungsventil 10 wird eingangsseitig über einen Steuerdruckanschluss 11 mit einem Druckmittel versorgt. Bei Betätigen eines Elektromagneten 12, der das Kupplungsventil 10 entgegen der Kraft einer Einstellfeder 13 in seine Arbeitsposition bringt, wird der Steuerdruckanschluss 11 mit einem Betätigungskanal 14 verbunden. Der an dem Steuerdruckanschluss 11 anliegende Druck wird damit über das Kupplungsventil 10 und den Betätigungskanal 14 dem Druckraum des Kupplungszylinders 8 zugeführt und wirkt dort auf die Kupplungskolbenfläche 9.

Der Kupplungskolben 7 ist entgegen der in dem Druckraum wirkenden Kraft durch eine Kupplungsfeder 15 beaufschlagt, durch die der Kupplungskolben 7 bei verschwindendem Druck in seiner Ruheposition gehalten wird. Wird nun die Kupplungskolbenfläche 9 nach dem Betätigen des Elektromagneten 12 mit dem Druck des Steuerdruckanschlusses 11 beaufschlagt, so wird der Kupplungskolben 7 entgegen der Kraft der Kupplungsfeder 15 verschoben und damit die Kupplung 6 betätigt. Bei dem dargestellten Ausführungsbeispiel bewirkt die Betätigung der Kupplung 6 ein kraftschlüssiges Verbinden der ersten Triebwelle 2 mit der zweiten Triebwelle 3. Gemäß dieser bevorzugten Ausführungsform wird durch die Kupplungsfeder 15 in der Ruheposition der Kupplung 6 die erste Triebwelle 2 von der zweiten Triebwelle 3 mechanisch getrennt.

Die Zuführung des hydraulischen Drucks von dem Steuerdruckanschluss 11 zu dem Kupplungsventil 10 erfolgt über ein in Richtung des Kupplungsventils 10 öffnendes Rückschlagventil 16. In einem Notbetrieb, der nachfolgend noch näher erläutert wird, wird durch das Rückschlagventil 16 ein unerwünschter Druckabbau verhindert.

Soll nach einer Betätigung die mechanische Kopplung der ersten Triebwelle 2 mit der zweiten Triebwelle 3 wieder gelöst werden, so wird der Elektromagnet 12 nicht länger bestromt. Der Elektromagnet 12 übt damit keine Kraft mehr entgegen der Einstellfeder 13 aus und das Kupplungsventil 10 kehrt in seine Ausgangsposition zurück. In der Ausgangsposition, in der das Kupplungsventil 10 durch die Einstellfeder 13 gehalten wird, verbindet das Kupplungsventil 10 den Betätigungskanal 14 mit einem Entlastungskanal 17, der in ein Tankvolumen 18 ausmündet. Der Druckraum in dem Kupplungszylinder 8 ist damit über den Betätigungskanal 14, das Kupplungsventil 10 und den Entlastungskanal 17 mit dem Tankvolumen 18 verbunden. Damit kann die Kupplungsfeder 15 den Kupplungskolben 7 in Richtung seiner Ruheposition verschieben und das in dem Druckraum befindliche Druckmittel in das Tankvolumen 18 verdrängen.

Der Betätigungskanal 14 verfügt über einen Entlüftungsanschluss 19. Durch den Entlüftungsanschluss 19 ist eine Entlüftung der hydraulischen Kanäle und Volumina der Kupplungsbetätigung möglich, so dass ein Lufteinschluss verhindert und damit eine hohe Betriebssicherheit erreicht wird.

Der über einen Zuleitungskanal 20 mit dem Rückschlagventil 16 verbundene Steuerdruckanschluss 11 ist mit einem ersten Eingang eines Wechselventils 21 verbunden. Ein zweiter Eingang des Wechselventils 21 ist mit einer ersten Arbeitsleitung 22 verbunden. Diese erste Arbeitsleitung 22 verbindet die hydrostatische Kolbenmaschine 4 mit einem hydraulischen Speicherelement 24, in das die hydrostatische Kolbenmaschine 4 ein über die zweite Arbeitsleitung 23 angesaugtes Druckmittel fördert, wenn sie zum Abbremsen eines Fahrzeugs als Pumpe betrieben wird. Um die hydrostatische Kolbenmaschine 4 als Pumpe betreiben zu können, muss die Kupplung 6 betätigt werden und ferner die hydrostatische Kolbenmaschine 4 durch die Verstelleinrichtung 5 aus ihrer Neutrallage heraus auf einen entsprechenden Schwenkwinkel verstellt werden.

Zum Verstellen der hydrostatischen Kolbenmaschine 4 dient die Verstelleinrichtung 5, die abhängig von einem durch ein Regelventil 32 geregelten Stelldruck das Verdrängungsvolumen der hydrostatischen Kolbenmaschine 4 regelt. Die Verstelleinrichtung 5 wird über einen Versorgungskanal 25, der mit dem Ausgang des Wechselventils 21 verbunden ist, mit Druckmittel versorgt. Das Druckmittel wird entweder von dem Steuerdruckanschluss 11 oder aber aus dem Speicherelement 24 zugeführt, wenn der Druck in dem Speicherelement 24 den Steuerdruck übersteigt.

Der Versorgungskanal 25 verzweigt sich in einen ersten Versorgungszweig 25' und einen zweiten Versorgungszweig 25''. Der erste Versorgungszweig 25' mündet in eine erste Stelldruckkammer 26 der Verstelleinrichtung 5 aus. Die erste Stelldruckkammer 26 und die zweite Stelldruckkammer 27 sind in der Verstelleinrichtung 5 zu beiden Seiten eines von einer ersten Rückstellfeder 28 und einer zweiten Rückstellfeder 29 in seiner Ruheposition gehaltenen Stellkolbens 30 ausgebildet. In der dargestellten Ruheposition des Stellkolbens 30 befindet sich die hydrostatische Kolbenmaschine 4, die über ein Gestänge 31 hinsichtlich ihres Verdrängungsvolumens abhängig von der Position des Stellkolbens 30 eingestellt wird, ebenfalls in ihrer Neutralstellung. In der Neutralstellung ist die hydrostatische Kolbenmaschine 4 auf ein kleineres Verdrängungsvolumen eingestellt. Die hydrostatische Kolbenmaschine kann aus der Neutralstellung zu beiden Seiten hin verstellt werden. In der Neutralstellung fördert die Pumpe gerade so viel Öl, dass der eigene Stellölbedarf gedeckt wird und eine Kupplungsfunktion übernommen werden kann.

Über ein mit dem Gestänge 31 verbundenes weiteres Gestänge 31' erfolgt eine Rückkopplung des eingestellten Verdrängungsvolumens auf das Regelventil 32. In der dargestellten Mittelstellung des Regelventils 32 ist die zweite Stelldruckkammer 27 über einen Stelldruckkanal 33 mit dem zweiten Versorgungszweig 25'' und einem Tankkanal 34 gedrosselt verbunden. Dabei stellt sich in der zweiten Stelldruckkammer 27 der zum Kraftgleichgewicht erforderliche Druck ein.

Zum Ausgleichen der unterschiedlichen wirkenden Kolbenflächen des Stellkolbens 30 in der ersten Stelldruckkammer 26 und in der zweiten Stelldruckkammer 27 ist in dem Regelventil 32 in seiner Mittelstellung sowohl an einem Eingangsanschluss 35, der mit dem zweiten Versorgungszweig 25" verbunden ist, als auch an dem Tankausgang 36, der mit dem Tankkanal 34 verbunden ist, eine Eingangsdrossel 38 bzw. eine Ausgangsdrossel 39 vorgesehen, die durch die jeweilige Steuerkante mit negativer Überdeckung gebildet sein kann.

Um beispielsweise ein Bremsmoment zu erzeugen, wenn die Kupplung 6 betätigt ist, wird die hydrostatische Kolbenmaschine 4 als Pumpe betrieben. Dazu muss die hydrostatische Kolbenmaschine 4 aus ihrer Neutralstellung verschwenkt werden. Zum Ausschwenken der hydrostatischen Kolbenmaschine 4 ist beispielsweise ein erster Stellmagnet 40 vorgesehen, der das Regelventil 32 aus seiner Mittelstellung in Richtung einer ersten Endposition verstellt. In entgegengesetzter Richtung ist das Regelventil 32 durch einen zweiten Stellmagneten 41 mit einer Kraft beaufschlagbar.

Solange an dem ersten Stellmagnet 40 und dem zweiten Stellmagnet 41 kein Steuersignal anliegt, wird die Position des Regelventils 32 durch eine erste Rückkopplungsfeder 42 und eine zweite Rückkopplungsfeder 43 bestimmt. Das Gegenlager für die erste Rückkopplungsfeder 42 und die zweite Rückkopplungsfeder 43 ist jeweils an dem weiteren Gestänge 31' ausgebildet. Die vorzugsweise identischen Rückkopplungsfedern 42 und 43 zentrieren dabei das Regelventil 32 in seiner Mittelposition, wenn der Stellkolben 30 sich in seiner Ruhestellung befindet.

Liegt nun zum Verschwenken der Schwenkscheibe der hydrostatischen Kolbenmaschine 4 an dem ersten Stellmagnet 40 ein Steuersignal an, so wird entgegen der Kraft der ersten Rückkopplungsfeder 42 das Regelventil 32 in Richtung seiner ersten Endposition verstellt. Dabei wird der Eingangsanschluss 35 zunehmend ungedrosselt mit dem Stelldruckanschluss 37 verbunden und somit fließt Öl in die zweite Stelldruckkammer 27. Der Stellkolben 30 wird damit in der Fig. 1 nach links verschoben und die hydrostatische Kolbenmaschine 4 von ihrer Neutralstellung ausgehend in Richtung eines größeren Verdrängungsvolumens verstellt.

Gleichzeitig mit dieser Verstellung wird entgegen der Kraft des ersten Stellmagneten 40 durch die Verschiebung des weiteren Gestänges 31' eine größer werdende Kraft durch die erste Rückkopplungsfeder 42 erzeugt, bis sich an dem Regelventil 32 ein Kräftegleichgewicht einstellt und kein weiteres Ausschwenken der hydrostatischen Kolbenmaschine 4 mehr erfolgt. In Abhängigkeit von der Größe des dem ersten Stellmagneten 40 zugeführten Steuersignals wird somit die hydrostatische Kolbenmaschine 4 auf ein bestimmtes Verdrängungsvolumen eingestellt, das zu einer entsprechenden Bremswirkung führt, indem die hydrostatische Kolbenmaschine 4 entgegen dem bereits in dem Speicherelement 24 befindlichen Druck fördert.

Durch das Antreiben der hydrostatischen Kolbenmaschine 4 über die erste Triebwelle 2 und die damit mittels der Kupplung 6 verbundene zweite Triebwelle 3 wird von der hydrostatischen Kolbenmaschine 4 Druckmittel aus der zweiten Arbeitsleitung 23 angesaugt und über die erste Arbeitsleitung 22 in das Speicherelement 24 gefördert. Das Speicherelement 24 ist beispielsweise ein Hydromembranspeicher oder ein Kolbenspeicher mit Gegendruck aus Gasflaschen, der ein Speichern erheblicher hydraulischer Energie ermöglicht.

Am Ende des Bremsvorgangs wird das Steuersignal für den ersten Stellmagneten 40 zurückgenommen und das Stelldruckregelventil 32 bewegt sich aufgrund der Kraft der ersten Rückkopplungsfeder 42 zurück in Richtung seiner zweiten Endposition. Dabei erfolgt eine zunehmend ungedrosselte Verbindung der zweiten Stelldruckkammer 27 mit dem Tankvolumen 18, so dass der Druck in der ersten Stelldruckkammer 26 das Öl der zweiten Stelldruckkammer 27 über das Regelventil 32 in den Tankkanal 34 schiebt. Das zum Volumenausgleich aus der zweiten Stelldruckkammer 27 ausströmende Druckmittel wird dabei über den Stelldruckkanal 33, das Stelldruckregelventil 32 und den Tankkanal 34 in das Tankvolumen 18 entlastet.

Zur Dämpfung und zum hydraulischen Ausgleich der Bewegung des Regelventils 32 dient eine kontrollierte Leckage in Richtung des ersten Stellmagneten 40 und in Richtung des zweiten Stellmagneten 41, wobei die Leckage über jeweils einen Leckagekanal 48 bzw. 48' abgeführt wird. Der Leckagekanal 48 bzw. 48' mündet in den Tankkanal 34 aus. Dabei ist zum Einstellen einer von der Bewegungsrichtung abhängenden Dämpfung in dem Leckagekanal 48 eine Drosselstelle 46 vorgesehen. Zum Einstellen der Stellgeschwindigkeiten ist außerdem in dem Stelldruckkanal 33 eine weitere Drosselstelle 47 vorgesehen.

Nach einem Bremsvorgang, bei dem die hydrostatische Kolbenmaschine 4 als Pumpe arbeitet, ist in dem Speicherelement 24 hydraulische Energie gespeichert, die durch das Betreiben der hydrostatischen Kolbenmaschine 4 als Motor bei einer nachfolgenden Beschleunigung genutzt werden kann. Da das Druckmittel nunmehr aus dem Speicherelement 24 heraus über die erste Arbeitsleitung 22 zu der hydrostatischen Kolbenmaschine 4 hin strömt, muss zur Beibehaltung der Drehrichtung die hydrostatische Kolbenmaschine 4 in entgegengesetzter Richtung ausgeschwenkt werden.

Um einen unerwünschten Druckverlust aus dem Speicherelement 24 zu vermeiden, ist in der Verbindung des Speicherelements 24 ein gegen eine Feder durch einen Elektromagneten betätigbares Speicherladeventil 125 vorgesehen. In den beiden Schaltpositionen ist entweder eine Verbindung zwischen dem Speicherelement 24 zu der ersten Arbeitsleitung 22 hergestellt oder unterbrochen. Die Sperrstellung, die der Ruhestellung entspricht, wird bei ausgekuppelter Kolbenmaschine 4 geschaltet.

Zum entgegengesetzten Verschwenken der Kolbenmaschine 4 wird der zweite Stellmagnet 41 mit einem Steuersignal beaufschlagt, womit das Regelventil 32 in Richtung seiner zweiten Endposition verstellt wird. Dabei wird ein mit dem Stelldruckkanal 33 verbundener Stelldruckanschluss 37 zunehmend ungedrosselt mit dem Tankausgang 36 verbunden, womit durch die zunehmend ungedrosselte Verbindung die zweite Stelldruckkammer 27 in Richtung des Tankvolumens 18 entspannt wird. Der Stellkolben 30 bewegt sich wegen der entstehenden Kraftdifferenz in der Fig. 1 nach rechts und bewirkt über das Gestänge 31 ein Verschwenken der hydrostatischen Kolbenmaschine 4 aus der Neutrallage heraus entgegengesetzt zu der zuvor beim Bremsvorgang beschriebenen Richtung. Dabei stellt sich erneut ein Kräftegleichgewicht zwischen der Kraft des zweiten Stellmagneten 41 und der entgegengesetzt gerichteten Kraft der zweiten Rückkopplungsfeder 43 ein.

Bei der Auslenkung des Regelventils 32 durch den ersten Stellmagneten 40 bzw. den zweiten Stellmagneten 41 addiert sich jeweils zu der Kraft der Stellmagneten 40 bzw. 41 die Kraft der jeweils gleichgerichteten Rückkopplungsfedern 43 bzw. 42, sowie die Kraft einer ersten Feder 44 bzw. einer zweiten Feder 45. Die zweite Feder 45 ist gegen die erste Feder 44 einstellbar ausgeführt und ermöglicht einen Ausgleich beispielsweise von Toleranzen der Stellmagnete 40 und 41.

Das Regelventil 32 weist eine justierbare Steuerbuchse 118 auf. Die justierbare Steuerbuchse 118 des Regelventils 32 ermöglicht einen Ausgleich zum Einstellen der Neutralstellung der Verstellung.

Bei einer Umkehr der Fahrtrichtung und der damit verbundenen Änderung der Drehrichtung der ersten Triebwelle 2 und der zweiten Triebwelle 3 wechselt entsprechend auch die Ansteuerung des ersten Stellmagneten 40 bzw. des zweiten Stellmagneten 41.

Zur Betätigung der Verstellung sind auch andere Ventile insbesondere Proportional-Regelventile mit elektrischer Rückführung vorgesehen oder Regelventile mit 4-Kantensteuerung in Verbindung mit einem Gleichgangskolben. Eine Rückführung erfolgt ebenso über Federn, wie für das dargestellte Ausführungsbeispiel beschrieben.

Bei dem dargestellten bevorzugten Ausführungsbeispiel der Fig. 1 ist für den Fall, dass die Betätigung der Kupplung 6 nicht in der oben beschriebenen Weise über das Kupplungsventil 10 erfolgen kann, eine Notbetätigung vorgesehen. Dabei wird der zur Betätigung der Kupplung 6 erforderliche hydraulische Druck durch einen pneumatisch-hydraulischen Wandler 50 mittelbar erzeugt. Zum Erzeugen des hydraulischen Drucks ist ein Wandlerkolben 51 in einem Wandlerzylinder 52 angeordnet. Über ein pneumatisches Ventil 53 kann eine an dem Wandlerkolben 51 ausgebildete Wandlerkolbenfläche 54 mit einem pneumatischen Druck beaufschlagt werden.

Im Normalbetrieb wird das Ventil 53 durch einen Elektromagneten 55 mit einer Kraft beaufschlagt, die das Ventil 53 entgegen der Kraft einer einstellbaren Druckfeder 56 in seiner Ausgangsposition hält. In dieser Ausgangsposition wirkt auf die Wandlerkolbenfläche 54 lediglich der atmosphärische Druck, da über das Ventil 53 ein Druckraum 58, in dem die Wandlerkolbenfläche 54 angeordnet ist, über einen Schalldämpfer 57 in die Umgebung entspannt wird.

Wird dagegen der Elektromagnet 55 nicht bestromt, so bringt die einstellbare Druckfeder 56 das Ventil 53 in dessen Arbeitsposition. In der Arbeitsposition des Ventils 53 wird eine pneumatische Druckquelle über einen pneumatischen Druckanschluss 59 mit dem Druckraum 58 verbunden. Der Wandlerkolben 51 wird durch den nun an der Wandlerkolbenfläche 54 wirkenden pneumatischen Druck entgegen der Kraft einer Wandlerkolbenrückstellfeder 60 in der Fig. 1 nach rechts verschoben, sofern durch die pneumatische Kraft die entgegengesetzte hydraulische Kraft und die Kraft der Wandlerkolbenrückstellfeder 60 überwunden wird. An dem Wandlerkolben 51 ist eine Druckerzeugungsfläche 61 ausgebildet, die in einem Hydraulikvolumen 62 dadurch einen Druck auf das in dem Hydraulikvolumen 62 befindliche Druckmittel ausübt. Das Hydraulikvolumen 62 ist mit dem Betätigungskanal 14 verbunden. Das Hydraulikvolumen 62 wird befüllt, indem bei Betätigung der Kupplung 6 das Druckmittel einströmt, was durch die Wandlerkolbenrückstellfeder 60 unterstützt wird.

Hierzu ist die Betätigung des Kupplungsventils 10 und des Ventils 53 synchronisiert, so dass zum Befüllen des Hydraulikvolumens 62 über den Entlastungskanal 17 Druckmittel nachgesaugt werden kann. Zum Druckaufbau wird dagegen das Kupplungsventil 10 in seine zweite Endposition gebracht, in der ein Druckabfall durch das Rückschlagventil 16 verhindert wird.

Durch den an dem Wandlerkolben 51 auf seine Wandlerkolbenfläche 54 wirkenden pneumatischen Druck wird an der Druckerzeugungsfläche 61 in dem Hydraulikvolumen 62 ein Druck erzeugt. Dieser wirkt zur Betätigung der Kupplung 6 auf die Kupplungskolbenfläche 9 und bewirkt damit eine Koppelung der ersten Triebwelle 2 mit der zweiten Triebwelle 3 auch ohne einen an dem Steuerdruckanschluss 11 anliegenden Steuerdruck.

Dabei ist auch zur Betätigung der Kupplung 6 im Notbetrieb der Elektromagnet 12 des Kupplungsventils 10 bestromt, so dass das Rückschlagventil 16 den Abbau des durch den pneumatisch-hydraulischen Wandler 50 erzeugten Drucks verhindert. Um weiterhin eine möglichst effiziente Ausnutzung des an dem pneumatischen Druckanschluss 59 anliegenden Drucks zu ermöglichen, ist das auf der Rückseite des Wandlerkolbens 51 als Federraum für die Wandlerkolbenrückstellfeder 60 ausgebildete Volumen über eine Druckausgleichsleitung 63 ebenfalls mit dem Schalldämpfer 57 verbunden, so dass keine Kompressionsarbeit verrichtet werden muss.

Die Ansteuerung der in der Fig. 1 dargestellten Ventile ist gemäß der dargestellten, bevorzugten Ausführungsform jeweils mit Elektromagneten realisiert. Die Erfindung ist jedoch nicht darauf beschränkt. Die Ansteuerung kann jeweils auch über beispielsweise das Anlegen einer hydraulischen Kraft an entsprechend ausgebildeten Flächen der Ventile erfolgen.

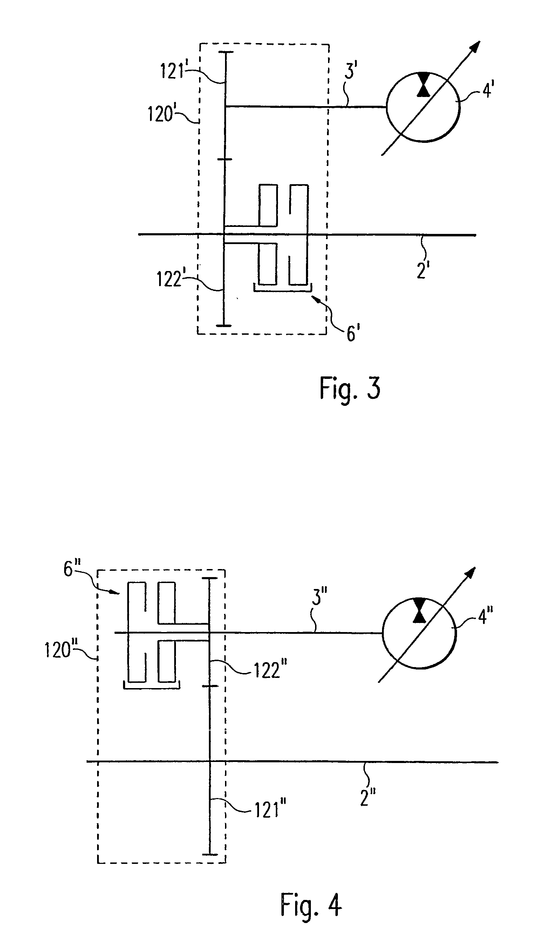

Anstelle der Anordnung der ersten Triebwelle 2 in der als Hohlwelle ausgebildeten zweiten Triebwelle 3, wie sie als bevorzugtes und besonders platzsparendes Ausführungsbeispiel in der Fig. 1 dargestellt ist, können die erste Triebwelle und die zweite Triebwelle auch versetzt zueinander angeordnet sein. Eine solche Anordnung ist in den Fig. 3 und 4 dargestellt. Die bereits zu dem Ausführungsbeispiel der Fig. 1 erläuterten Bauelemente sind in der Fig. 3 mit gestrichenen Bezugszeichen versehen, während sie in dem weiteren Ausführungsbeispiel der Fig. 4 mit entsprechenden, zweifach gestrichenen Bezugszeichen gekennzeichnet sind.

In dem in der Fig. 3 dargestellten Ausführungsbeispiel ist die hydrostatische Kolbenmaschine 4' mit der zweiten Triebwelle 3' verbunden. Am Ende der zweiten Triebwelle 3' ist mit dieser ein Festrad 121' verbunden, welches ein erstes Zahnrad einer Getriebestufe ausbildet. Die Getriebestufe ist in einem Getriebegehäuse 120' angeordnet und wird durch ein Losrad 122' vervollständigt. Das Losrad 122' befindet sich in permanenten Eingriff mit dem Festrad 121' und ist über die Kupplung 6' mit der ersten Triebwelle 2' mechanisch koppelbar.

Die Kupplung 6' entspricht in ihrem Aufbau der aus der Fig. 1 bekannten Kupplung, wird also hydraulisch betätigt. Hierzu wird der Zuleitungskanal 20 aus der Fig. 1 bis zu dem Getriebegehäuse 120' verlängert, so dass die Kupplung 6' wie schon bei dem aus der Fig. 1 bekannten Ausführungsbeispiel ebenfalls über einen Steuerdruckanschluss 11 mit Druckmittel versorgt wird.

Ein weiteres Ausführungsbeispiel ist in der Fig. 4 dargestellt. Dabei ist nun im Unterschied zu dem vorangegangenen Ausführungsbeispiel der Fig. 3 das Losrad 122" auf der zweiten Triebwelle 3" angeordnet. Das Losrad 122" steht wiederum dem Festrad 121" in permanenter Verbindung. Das Festrad 121" ist mit der ersten Triebwelle 2" fest verbunden. Der Kraftschluss zwischen dem Losrad 122" und der zweiten Triebwelle 3" wird wiederum über eine in dem Getriebegehäuse 120" angeordnete Kupplung 6" hergestellt. Hierzu ist erneut der Zuleitungskanal 20 über z.B. eine zusätzliche Leitung mit der Kupplung 6" verbunden. In dem Getriebegehäuse 120" kann dann ein entsprechender Abschnitt des Zuleitungskanals 20 als weiterer Zuleitungskanalabschnitt ausgebildet sein.

Zum Steuern des erfindungsgemäßen Antriebssystems 1 wird die Drehzahl der ersten Triebwelle 2 durch einen ersten Drehzahlsensor 64 und die Drehzahl der zweiten Triebwelle 3 durch einen zweiten Drehzahlsensor 65 ermittelt. Um dem ersten Stellmagneten 40 bzw. dem zweiten Stellmagneten 41 ein in Abhängigkeit von der erforderlichen Brems- oder Beschleunigungsleistung bemessenes Steuersignal zuführen zu können wird außerdem mittels eines Winkelsensors 66 der jeweils eingestellte Schwenkwinkel der hydrostatischen Kolbenmaschine 4 ermittelt und gemeinsam mit den Drehzahlsignalen sowie dem von einem Drucksensor 67 gemessenen Druck in der zweiten Arbeitsleitung 23 an ein nicht dargestelltes Steuergerät übermittelt. Dieses Steuergerät ermittelt auf Basis der gemessenen Werte, die als elektrische Signale weitergeleitet werden, die für eine vorgegebene Verzögerung oder Beschleunigung erforderlichen Signalgrößen. Dabei wird der Winkelsensor 66 auch zur Rückführung einer Ansteuerelektronik verwendet.

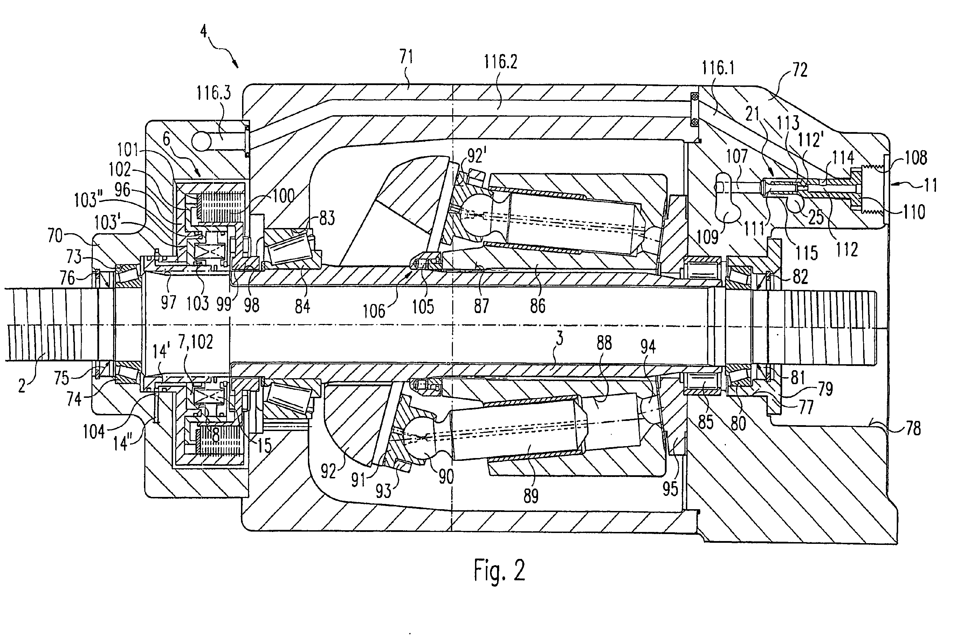

In der Fig. 2 ist ein Schnitt durch eine hydrostatische Kolbenmaschine 4 eines erfindungsgemäßen Antriebssystems 1 gezeigt. Die hydrostatische Kolbenmaschine 4 weist ein dreiteiliges Gehäuse auf, bei dem ein Gehäusedeckel 70 einen Gehäusekörper 71 verschließt, wobei in dem Gehäusedeckel 70 die Kupplung 6 angeordnet ist. An der gegenüberliegenden Seite des Gehäusekörpers 71 wird das Gehäuse durch eine Anschlussplatte 72 vervollständigt.

Das Gehäuse der hydrostatischen Kolbenmaschine 4 wird vollständig von der ersten Triebwelle 2 durchdrungen. Hierzu weist der Gehäusedeckel 70 eine Durchgangsöffnung 73 auf. Die Durchgangsöffnung 73 ist mehrstufig ausgeführt und erweitert sich in Richtung des Gehäusekörpers 71 so, dass in der sich erweiternden Durchgangsöffnung 73 die Kupplung 6 angeordnet werden kann. In der Durchgangsöffnung 73 ist zur Lagerung der ersten Triebwelle 2 ein erstes Kegelrollenlager 74 angeordnet. Der innere Lagerring des ersten Kegelrollenlagers 74 stützt sich in axialer Richtung auf einem Absatz der ersten Triebwelle 2 ab, während der äußere Lagerring des ersten Kegelrollenlagers 74 von der dem Gehäusekörper 71 zugewandten Seite des Gehäusedeckels 70 her in die Durchgangsöffnung 73 eingesetzt ist und sich dort an einem entsprechenden Absatz abstützt. In Richtung der Gehäuseaußenseite schließt sich an das erste Kegelrollenlager 74 ein erstes Dichtelement 75 an, welches in der Durchgangsöffnung 73 mit Hilfe eines ersten Sicherungsrings 76 fixiert ist.

An dem gegenüberliegenden Ende der hydrostatischen Kolbenmaschine 4 ist in der Anschlussplatte 72 eine weitere Durchgangsöffnung 77 ausgebildet, die in eine von der Außenseite her in die Anschlussplatte 72 eingebrachte Vertiefung 78 ausmündet. Zur Lagerung und Fixierung der ersten Triebwelle 2 wird in diese weitere Durchgangsöffnung 77 ein Haltering 79 eingesetzt, der einen äußeren Lagerring eines zweiten Kegelrollenlagers 80 aufnimmt. Der innere Lagerring des zweiten Kegelrollenlagers 80 stützt sich wiederum an einem Absatz der ersten Triebwelle 2 ab. Die beiden in O-Anordnung angeordneten Kegelrollenlager 74 und 80 fixieren damit die erste Triebwelle 2 sowohl in radialer als auch in axialer Richtung. In Richtung der Außenseite des Gehäuses der hydrostatischen Kolbenmaschine 4 schließt sich an das zweite Kegelrollenlager 80 ein zweites Dichtelement 81 an, welches durch einen zweiten Sicherungsring 82 fixiert ist.

Auf seiner zu dem Gehäusedeckel 70 hin orientierten Seite weist der Gehäusekörper 71 eine Öffnung 83 auf, in der der äußere Lagerring eines dritten Kegelrollenlagers 84 angeordnet ist. Der innere Lagerring des dritten Kegelrollenlagers 84 ist auf die zweite Triebwelle 3 aufgepresst. An dem gegenüberliegenden Ende der als Hohlwelle ausgebildeten zweiten Triebwelle 3 befindet sich ein Zylinderrollenlager 85, welches ebenfalls in die weitere Durchgangsöffnung 77 des Steuerblocks 72 eingesetzt ist. Die Lagerung der ersten Triebwelle 2 und der zweiten Triebwelle 3 erfolgt damit unabhängig voneinander, so dass die beiden Triebwellen 2 und 3 unabhängig voneinander rotieren können. Damit kann insbesondere die Hohlwelle, also die zweite Triebwelle 3, eine verschwindende Drehzahl haben, während sich die erste Triebwelle 2 der Fahrgeschwindigkeit des Fahrzeugs entsprechend dreht. Damit werden im normalen Fahrbetrieb Schleppverluste durch die hydrostatische Kolbenmaschine 4 vermieden.

Mit der zweiten Triebwelle 3 ist eine Zylindertrommel 86 permanent drehfest verbunden, wozu in eine zentrale Ausnehmung der Zylindertrommel 86 eine mit einer Verzahnung 87 der zweiten Triebwelle 3 korrespondierende Verzahnung eingebracht ist. Durch diese Verzahnung 87 ist die Zylindertrommel 86 in axialer Richtung verschiebbar auf der zweiten Triebwelle 3 angeordnet und gleichzeitig können Drehmomente zwischen der Zylindertrommel 86 und der zweiten Triebwelle 3 übertragen werden. Über den Umfang der Zylindertrommel 86 sind in der Zylindertrommel 86 mehrere Zylinderbohrungen 88 gleichmäßig verteilt angeordnet. In den Zylinderbohrungen 88 ist jeweils ein Kolben 89 längsverschieblich angeordnet.

Zum Erzeugen einer Hubbewegung der Kolben 89 ist an dem aus der Zylindertrommel 86 herausragenden Ende jeweils ein Kugelkopf 90 an den Kolben 89 ausgebildet, wobei jeder Kugelkopf 90 mit einem Gleitschuh 91 verbunden ist. Der Gleitschuh 91 stützt sich an einer Gleitfläche 92' einer Schwenkscheibe 92 ab, so dass bei einer Neigung der Schwenkscheibe 92 relativ zu der Drehachse der Zylindertrommel 86 die Kolben 89 in den Zylinderbohrungen 88 eine Hubbewegung ausführen. Um während eines Saughubs im Pumpbetrieb das Abheben der Gleitschuhe 91 von der Gleitfläche 92' der Schwenkscheibe 92 zu verhindern, ist eine Rückzugplatte 93 vorgesehen, die sich an einem sphärischen Gegenlager 106 abstützt.

Das sphärische Gegenlager 106 umfasst auch Druckfedern 105, die sich über ein Zwischenstück an der Zylindertrommel 86 abstützen. Durch das sphärische Gegenlager 106 werden damit die Zylindertrommel 86 und die zweite Triebwelle 3 in entgegengesetzter Richtung axial mit einer Kraft beaufschlagt. Die von der Schwenkscheibe 92 abgewandte Seite der Zylindertrommel 86 ist ebenfalls leicht sphärisch ausgeführt. In diese sphärische Fläche münden Zylinderöffnungen 94 aus, durch die das Druckmittel aus den Zylinderbohrungen 88 aus- bzw. in die es eintritt.

In nicht dargestellter Weise wird bei einem Betrieb der hydrostatischen Kolbenmaschine 4 als Pumpe das Druckmittel durch die Zylinderöffnungen 94 über eine nicht gezeigte Steuerniere einer Steuerplatte 95 und weiter über die Anschlussplatte 72 zu einer der daran angeschlossenen Arbeitsleitungen gefördert. Wegen der sphärischen Ausbildung der Anlagefläche zwischen der Zylindertrommel 86 und der Steuerplatte 95 zentriert sich die Zylindertrommel 6 an der Steuerplatte 95. Zudem wird aufgrund der Druckfeder 105 ein Abdichten der Zylindertrommel 86 an der Steuerplatte 95 erreicht, wodurch Leckageverluste reduziert werden.

Wie es bereits unter Bezugnahme auf den hydraulischen Schaltplan der Fig. 1 erläutert wurde, ist zur mechanischen Kopplung der ersten Triebwelle 2 mit der zweiten Triebwelle 3 eine Kupplung 6 vorgesehen. Die Kupplung 6 umfasst einen Kupplungskorb 96 der über eine erste Mitnahmeverzahnung 97 mit der ersten Triebwelle 2 drehfest verbunden ist. Entsprechend ist an der zweiten Triebwelle 3 eine zweite Mitnahmeverzahnung 98 vorgesehen, mit der eine Kupplungsnabe 99 drehfest verbunden ist. Die Kupplungsnabe 99 ist dabei etwa topfförmig ausgebildet und ragt in den ebenfalls näherungsweise topfförmig ausgebildeten Kupplungskorb 96 hinein. Der Kupplungskorb 96 ist hierzu umgekehrt zu der Kupplungsnabe 99 angeordnet, so dass sich der Kupplungskorb 96 und die Kupplungsnabe 99 in axialer Richtung ein Stück weit überlappen.

Der Außendurchmesser der Kupplungsnabe 99 ist kleiner als der Innendurchmesser des Kupplungskorbs 96, so dass zwischen dem Kupplungskorb 96 und der Kupplungsnabe 99 ein ringförmiger Zwischenraum entsteht. In diesem Zwischenraum sind eine Anzahl von Kupplungsscheiben 100 angeordnet, die jeweils abwechselnd drehfest mit dem Kupplungskorb 96 und der Kupplungsnabe 99 verbunden sind. Solange die Kupplungsscheiben 100 nicht in axialer Richtung aufeinander gepresst werden wird zwischen ihnen keine Reibungskraft erzeugt und sie können sich gegeneinander verdrehen, so dass zwischen dem Kupplungskorb 96 und der Kupplungsnabe 99 kein Drehmoment übertragen wird. Der Kupplungskorb 96 ist so ausgebildet, dass er gleichzeitig den in Fig. 1 mit 8 bezeichneten Kupplungszylinder bildet.

Um aus diesem ausgekuppelten Zustand in einen eingekuppelten Zustand zu wechseln, werden die Kupplungsscheiben 100 durch eine Druckplatte 101 in axialer Richtung mit einer Kraft beaufschlagt. Diese axiale Kraft presst die Kupplungsscheiben 100 aufeinander, so dass von der ersten Triebwelle 2 über den Kupplungskorb 96 und den damit in Eingriff befindlichen Teil der Kupplungsscheiben 100 auf den mit der Kupplungsnabe 99 in Eingriff befindlichen Teil der Kupplungsscheiben 100 aufgrund der zwischen den Kupplungsscheiben 100 wirkenden Reibung ein Drehmoment übertragen wird.

Zum Erzeugen der axialen Kraft auf die Druckplatte 101 ist ein Kupplungskolben 102 vorgesehen, der an einer Kupplungskolbenfläche, bestehend aus den Kupplungskolbenteilflächen 103, 103' und 103'' mit einem hydraulischen Druck beaufschlagbar ist und der dem Kupplungskolben 7 der Fig. 1 entspricht. Zum Ausbilden der in Fig. 1 mit Bezugszeichen 9 bezeichneten Kupplungskolbenfläche sind an dem Kupplungskolben 102 Absätze als Kupplungskolbenteilflächen 103, 103' und 103'' ausgebildet. In dem Kupplungskorb 96 verlaufen weiterhin mehrere Betätigungskanalabschnitte 14', die zumindest teilweise mit einem Ende in einen zwischen der Kupplungskolbenteilfläche 103 und dem Kupplungskorb 96 ausgebildeten Hohlraum ausmünden. Die Betätigungskanalabschnitte 14' des Kupplungskorbs 96 münden an ihrem anderen Ende so in eine umlaufende Nut 104 aus, dass sie in permanenter Verbindung mit einem in dem Gehäusedeckel 70 angeordneten weiteren Betätigungskanalabschnitt 14'' stehen. Die Betätigungskanalabschnitte 14' und der Betätigungskanalabschnitt 14'' bilden gemeinsam den Betätigungskanal 14 der Fig. 1.

Die umlaufende Nut 104 mit danebenliegenden Dichtungen bildet eine Drehdurchführung für den Betätigungskanal 14' bis 14".

Zum Ausbilden des Steuerdruckanschlusses 11 ist in der Anschlussplatte 72 eine zweistufige Ausnehmung 107 eingebracht. Die zweistufige Ausnehmung 107 erweitert sich in Richtung der Außenseite der Anschlussplatte 72, wobei in dem äußeren, erweiterten Bereich ein Gewinde 118 zum Anschließen einer nicht dargestellten Steuerdruckleitung vorgesehen ist. In dem dargestellten Ausführungsbeispiel ist die zweistufige Ausnehmung 107 als Sackloch in der Anschlussplatte 72 ausgebildet, wobei die Bohrung in einen Kanal 109 ausmündet, der mit der in der Fig. 2 nicht erkennbaren ersten Arbeitsleitung 22 verbunden ist.

In die zweistufige Ausnehmung 107 ist ein Wechselventileinsatz 110 eingesetzt. Der Wechselventileinsatz 110 ist ebenfalls mehrstufig ausgebildet. In einem hülsenförmigen Ende des Wechselventileinsatzes 110 ist ein Stößel 111 axial verschiebbar angeordnet, an dessen Enden jeweils eine Dichtfläche ausgebildet ist. Der Stößel 111 sitzt entweder dichtend auf der zu dem Kanal 109 hin orientierten Stufe der zweistufigen Ausnehmung 107 auf oder aber er verschließt die axiale Öffnung 112'. Radiale Öffnungen 113, die in dem hülsenförmigen Abschnitt des Wechselventileinsatzes 110 angeordnet sind, verbinden die offene axiale Öffnung 112' mit dem ringförmigen Raum 115 und dem Versorgungskanal 25. Wenn der Stößel 111 an der Stufe der zweistufigen Ausnehmung 107 dichtend aufliegt, ist die Verbindung zwischen dem ringförmigen Raum 115 und dem Kanal 109 unterbrochen, während das über eine zentrale Bohrung 112 und die sich daran anschließende axiale Öffnung 112' des Wechselventileinsatzes 110 von dem Steuerdruckanschluss 11 her zugeführte Druckmittel in den ringförmigen Raum 115 und damit in den Versorgungskanal 25 strömen kann.

Befindet sich der Stößel 111 andererseits an seinem entgegengesetzten Anschlag, so wird die axiale Öffnung 112' von ihm verschlossen und der Kanal 109 über den ringförmigen Raum 115 mit dem Versorgungskanal 25 verbunden.

Der Wechselventileinsatz 110 weist zudem einen Abschnitt auf, dessen Außendurchmesser mit dem Durchmesser des mittleren Abschnitts der zweistufigen Ausnehmung 107 korrespondiert. In diesem Bereich mündet in die zweistufige Ausnehmung 107 auch ein erster Zuleitungskanalabschnitt 116.1, der von dort durch die Anschlussplatte 72 zu einer Kontaktfläche der Anschlussplatte 72 mit dem Gehäusekörper 71 führt. In dem Gehäusekörper 71 ist zum Weiterführen des Kanals ein zweiter Zuleitungskanalabschnitt 116.2 ausgebildet, über den das Druckmittel von dem Steuerdruckanschluss 11 in den Gehäusedeckel 70 geführt wird, in dem ein dritter Zuleitungskanalabschnitt 116.3 ausgebildet ist. Damit wird über den ersten, zweiten und dritten Zuleitungskanalabschnitt 116.1, 116.2 und 116.3 der in Fig. 1 gezeigte Zuleitungskanal 20 gebildet und das über den Steuerdruckanschluss 11 zugeführte Druckmittel zu dem vorzugsweise in dem Gehäusedeckel 70 angeordneten Kupplungsventil 10 geleitet, welches in dem in der Fig. 2 dargestellten Schnitt nicht sichtbar ist. Zum Verbinden des Steuerdruckanschlusses 11 mit dem ersten Zuleitungskanalabschnitt 116.1 ist in dem Wechselventileinsatz 110 eine weitere radiale Öffnung 114 vorgesehen.

An den Verbindungsstellen des ersten Zuleitungskanalabschnitts 116.1 mit dem zweiten Zuleitungskanalabschnitt 116.2 und des zweiten Zuleitungskanalabschnitts 116.2 mit dem dritten Zuleitungskanalabschnitt 116.3 ist in den Gehäusedeckel 70 bzw. den Gehäusekörper 71 jeweils ein Absatz eingebracht, in den beispielsweise eine O-Ring-Dichtung eingelegt wird.

Das erfindungsgemäße Antriebssystem 1 ist nicht auf das dargestellte Ausführungsbeispiel beschränkt. An Stelle des dargestellten Wechselventils 21 kann beispielsweise auch ein mit einer Kugel als Schließkörper ausgerüstetes Ventil eingesetzt werden. Die Ansteuerung der in dem hydraulischen Schaltplan der Fig. 1 dargestellten Ventile mit Elektromagneten stellt ebenfalls lediglich eine bevorzugte Ausführungsform dar.

Das in der Fig. 2 dargestellte Ausführungsbeispiel zeigt eine besonders platzsparende Anordnung der ersten Triebwelle 2 in der als Hohlwelle ausgeführten zweiten Triebwelle 3, wobei beide Triebwellen die hydrostatische Kolbenmaschine 4 durchdringen. Ebenso können jedoch die erste Triebwelle, die zweite Triebwelle und die hydrostatische Kolbenmaschine nicht konzentrisch oder zumindest axial versetzt zueinander angeordnet sein, wie es mit dem Beispiel einer Getriebestufe zwischen der ersten Triebwelle und der zweiten Triebwelle in den Figuren 3 und 4 bereits erläutert wurde.

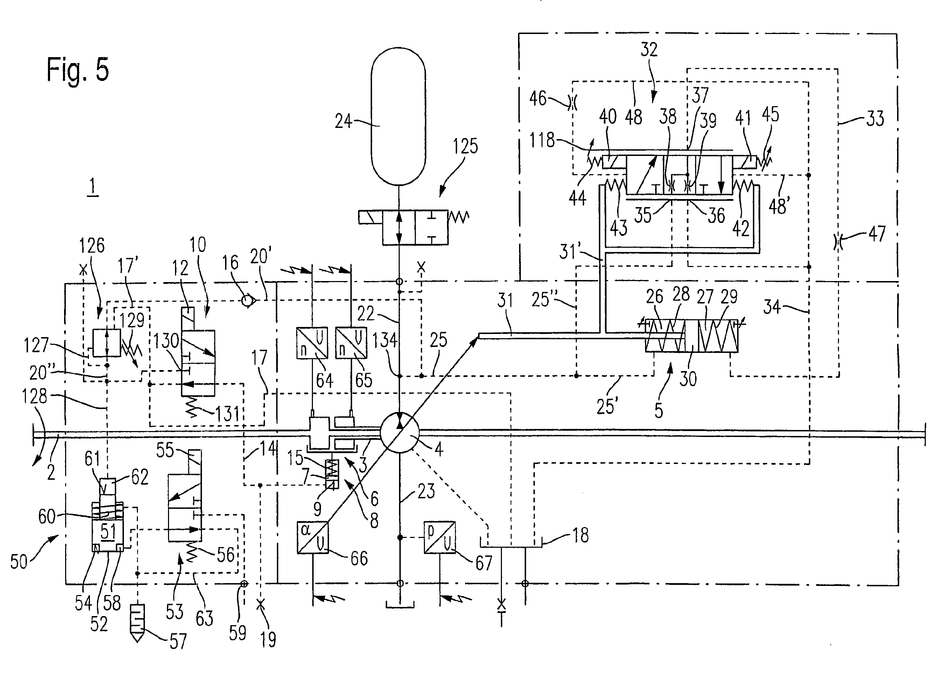

In der Fig. 5 ist ein zweites Ausführungsbeispiel des erfindungsgemäßen Antriebssystems dargestellt. Der zur Betätigung der Kupplung 6 erforderliche Druck wird hier über einen Zuleitungskanal 20' dem Kupplungsventil 10 zugeführt, wobei der Zuleitungskanal 20' nicht über einen Steuerdruckanschluss mit einem Druck beaufschlagt wird, sondern unmittelbar aus der ersten Arbeitsleitung 22 mit Druckmittel versorgt wird. Der Zuleitungskanal 20' ist hierzu über den Versorgungskanal 25 und einen Arbeitsleitungsanschluss 134 mit der ersten Arbeitsleitung 22 verbunden. Da der Druck in dem Zuleitungskanal 20' auf diese Weise nicht mehr unabhängig von dem Förderdruck der hydrostatischen Kolbenmaschine 4 vorgegeben werden kann, ist in dem Zuleitungskanal 20' ein Druckminderventil 126 vorgesehen.

Übersteigt ein in einem zwischen dem Druckminderventil 126 und dem Kupplungsventil 10 ausgebildeten Abschnitt 20'' des Zuleitungskanals 20' herrschender Druck, der durch eine Messleitung 127 auf das Druckminderventil 126 zurückgekoppelt wird, einen mittels einer Feder 129 einstellbaren Druckwert, so wird durch das Druckminderventil 126 der Abschnitt 20" des Zuleitungskanals 20' über einen Verbindungsabschnitt 17' mit dem Entlastungskanal 17 verbunden. Durch das Druckminderventil 126 wird damit in dem Abschnitt 20" des Zuleitungskanals 20' ein Druck eingestellt, mit denen eine sichere Betätigung der Kupplung 6 möglich ist, ohne die Kupplungsbetätigung mit zu hohen Drücken zu belasten.

Da die Kupplungsbetätigung nunmehr mittels eines von der hydrostatischen Kolbenmaschine 4 erzeugten Drucks erfolgt, wird das Fördervolumen der hydrostatischen Kolbenmaschine 4 in ihrer Ruheposition nicht auf Null zurückgestellt. Vielmehr wird die Kolbenmaschine 4 in ihrer Neutralstellung auf einen minimalen Schwenkwinkel eingestellt, so dass bei einer Verbindung der ersten Triebwelle 2 mit der zweiten Triebwelle 3 durch eine pneumatische Betätigung der Kupplung 6 durch die hydrostatische Kolbenmaschine 4 ein ausreichender Druck erzeugt wird, um anschließend die Kupplung 6 hydraulisch betätigen zu können und so vollen Kraftschluss zu erreichen. Die durch die rein hydraulische Betätigung erreichbaren Kräfte an der Kupplung 6 übersteigen die bei pneumatischer Betätigung deutlich. Für einen Betrieb der hydrostatischen Kolbenmaschine 4 bei hohen Leistungen ist daher die pneumatisch hydraulische Betätigung nicht ausreichend.

Wird zur pneumatischen Betätigung das pneumatische Ventil 53 geschaltet und damit in dem Hydraulikvolumen 63 ein Druck erzeugt, wird anders als bei dem ersten Ausführungsbeispiel der Fig. 1 dieser Druck über eine Druckleitung 128 dem Abschnitt 20'' des Zuleitungskanals 20' zugeführt. Damit wird über die Druckleitung 128 der von dem pneumatisch hydraulischen Wandler 50 erzeugte hydraulische Druck einem Eingangsanschluss 130 des Kupplungsventils 10 zugeführt. Auf diese Weise ist es möglich, zunächst an dem Eingangsanschluss 130 des Kupplungsventils 10 einen Druck zu erzeugen, und nach dem Druckaufbau das Kupplungsventil 10 zu betätigen und damit die Kupplung 6 einzurücken.

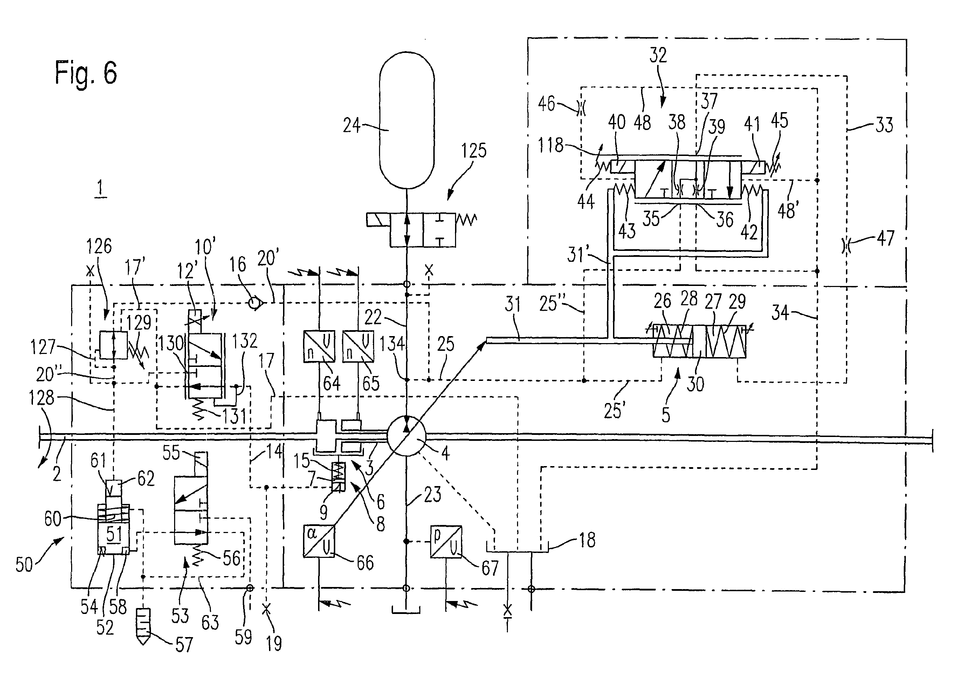

Das dritte Ausführungsbeispiel, das in der Fig. 6 dargestellt ist, geht aus von dem zweiten Ausführungsbeispiel der Fig. 5. Die Betätigung der Kupplung 6 wird hier durch ein Kupplungsventil 10' erreicht, das als Proportionalventil ausgeführt ist. Das Kupplungsventil 10' ist zwischen seinen beiden Endpositionen in eine beliebige Position einstellbar. Hierzu ist einerseits ein Proportionalmagnet 12' vorgesehen, der das Kupplungsventil 10' in Richtung einer ersten Schaltposition beaufschlagt. In entgegengesetzter Richtung wirkt auf das Kupplungsventil 10' die Kraft einer Einstellfeder 131, wobei ebenfalls in Richtung der Kraft der Einstellfeder 131 an dem Kupplungsventil 10' eine hydraulische Kraft angreift. Diese hydraulische Kraft wird durch den in dem Betätigungskanal 14 herrschenden Druck erzeugt, der über einen Betätigungsmesskanal 132 an einer Messfläche des Kupplungsventils 10' angreift.

Bei den Ausführungsbeispielen der Fig. 5 und 6, bei denen der durch die pneumatische Vorrichtung erzeugte hydraulische Druck nicht unmittelbar dem Betätigungskanal 14 zugeführt wird, besteht der Vorteil, dass eine synchrone Beaufschlagung des Elektromagneten 12 bzw. des Proportionalmagneten 12' und des Elektromagneten 55 des pneumatischen Ventils 53 nicht erforderlich ist. Dies ist insbesondere bei dem Ausführungsbeispiel der Fig. 6 von Vorteil, da auf diese Weise der Proportionalmagnet 12' unabhängig von dem Elektromagneten 55 betätigt werden kann, so dass auch im Falle einer rein hydraulischen Betätigung der Kupplung 6 ein feinfühliges Einkuppeln möglich ist.

Die Erfindung ist nicht auf die dargestellten Ausführungsbeispiele beschränkt, sondern umfasst auch beliebige Kombinationen der einzelnen Merkmale der Ausführungsbeispiele.

## Patentansprüche

1. Antriebssystem mit einer ersten Triebwelle (2) und einer mit einer zweiten Triebwelle (3) drehfest verbundenen Zylindertrommel (86) einer hydrostatischen Kolbenmaschine (4), wobei das Verdrängungsvolumen der hydrostatischen Kolbenmaschine (4) über eine Verstelleinrichtung (5) verstellbar ist und die erste Triebwelle (2) mit der zweiten Triebwelle (3) über eine Kupplung (6) mechanisch koppelbar ist,
**dadurch gekennzeichnet,**
**dass** die hydrostatische Kolbenmaschine (4) in ihrer Neutralstellung auf einen minimalen Schwenkwinkel eingestellt ist und
**dass** die Verstelleinrichtung (5) und die Kupplung (6) hydraulisch betätigbar sind und zur Betätigung mit einem gemeinsamen Arbeitsleitungsanschluss (134) verbunden sind.

2. Antriebssystem nach Anspruch 1,
**dadurch gekennzeichnet,**
**dass** der Steuerdruckanschluss (11) oder der gemeinsame Arbeitsleitungsanschluss (134) in einer Anschlussplatte (72) der hydrostatischen Kolbenmaschine (4) ausgebildet ist.

3. Antriebssystem nach einem der Ansprüche 1 und 2,
**dadurch gekennzeichnet,**
**dass** die Kupplung (6) in einem Gehäusedeckel (70) der hydrostatischen Kolbenmaschine (4) oder in einem Getriebegehäuse (120', 120") angeordnet ist.

4. Antriebssystem nach einem der Ansprüche 1 bis 3,
**dadurch gekennzeichnet,**
**dass** zur hydraulischen Betätigung der Kupplung (6) eine mit einer hydraulischen Kraft beaufschlagbare Kupplungskolbenfläche (9, 103, 103") vorgesehen ist, zu deren Beaufschlagung eine Verbindung zwischen dem Steuerdruckanschluss (11) bzw. dem gemeinsamen Arbeitsleitungsanschluss (134) und der Kupplung (6) über einen in einem Gehäuse der hydrostatischen Kolbenmaschine (4) und/oder einem Getriebegehäuse (120', 120") ausgebildeten Zuleitungskanal (116.1, 116.2, 116.3) ausgebildet ist.

5. Antriebssystem nach Anspruch 4,
**dadurch gekennzeichnet,**
**dass** zum Betätigen der Kupplung (4) in dem Zuleitungskanal (116.1, 116.2, 116.3) ein Kupplungsventil (10, 10') vorgesehen ist, durch das die auf die Kupplungskolbenfläche (9, 103, 103', 103") wirkende hydraulische Kraft einstellbar ist.

6. Antriebssystem nach Anspruch 5,
**dadurch gekennzeichnet,**
**dass** über das Kupplungsventil (10, 10') ein zu der Kupplungskolbenfläche (9, 103) führender Betätigungskanal (14) entweder mit dem Steuerdruckanschluss (11) bzw. dem gemeinsamen Arbeitsleitungsanschluss (134) oder mit einem Tankvolumen (18) verbunden ist.

7. Antriebssystem nach Anspruch 5 oder 6,
**dadurch gekennzeichnet,**
**dass** die Kupplungskolbenfläche (9, 103, 103', 103") über einen pneumatisch-hydraulischen Wandler (50) mit einer hydraulischen Kraft beaufschlagbar ist.

8. Antriebssystem nach Anspruch 7,
**dadurch gekennzeichnet,**
**dass** zum Erzeugen der hydraulischen Kraft über den pneumatisch-hydraulischen Wandler (50) eine Fläche (54) eines Wandlerkolbens (51) mit einer pneumatischen Kraft beaufschlagbar ist.

9. Antriebssystem nach Anspruch 8,
**dadurch gekennzeichnet,**
**dass** zum Betätigen des pneumatisch-hydraulischen Wandlers (50) ein Ventil (53) vorgesehen ist, über das die Fläche (54) des Wandlerkolbens (51) aus einer pneumatischen Druckquelle beaufschlagbar ist.

10. Antriebssystem nach einem der Ansprüche 7 bis 9,
**dadurch gekennzeichnet,**
**dass** der von dem pneumatisch-hydraulischen Wandler (50) in einem Hydraulikvolumen (62) erzeugte hydraulische Druck dem Steuerdruckanschluss (11) bzw. einem Eingangsanschluss (130) des Kupplungsventils (10, 10') zuführbar ist.

11. Antriebssystem nach einem der Ansprüche 1 bis 10,
**dadurch gekennzeichnet,**
**dass** die zweite Triebwelle (3) als Hohlwelle ausgebildet ist, die von der ersten Triebwelle (2) durchdrungen ist.

12. Antriebssystem nach einem der Ansprüche 1 bis 11,
**dadurch gekennzeichnet,**
**dass** die erste Triebwelle (2) ein Abschnitt eines Antriebsstrangs eines Fahrzeugs ist.

13. Antriebssystem nach einem der Ansprüche 1 bis 12,
**dadurch gekennzeichnet,**
**dass** die erste Triebwelle (2) und die zweite Triebwelle (3) über eine Getriebestufe zusammenwirken.

## Claims

1. Drive system having a first drive shaft (2) and a cylinder drum (86), connected in a rotationally fixed manner to a second drive shaft (3), of a hydrostatic piston machine (4), the displacement volume of the hydrostatic piston machine (4) being adjustable via an adjusting device (5) and the first drive shaft (2) being able to be mechanically coupled to the second drive shaft (3) via a clutch (6),
**characterised**
**in that** the hydrostatic piston machine (4) is set to a minimum pivot angle in its neutral position and
**in that** the adjusting device (5) and the clutch (6) are hydraulically actuable and are connected to a common working line connection (134) for actuation.

2. Drive system according to Claim 1,
**characterised**
**in that** the control pressure connection (11) or the common working line connection (134) is formed in a connection plate (72) of the hydrostatic piston machine (4).

3. Drive system according to one of Claims 1 and 2,
**characterised**
**in that** the clutch (6) is arranged in a housing cover (70) of the hydrostatic piston machine (4) or in a gearing housing (120', 120").

4. Drive system according to one of Claims 1 to 3,
**characterised**
**in that**, for the hydraulic actuation of the clutch (6), there is provided a clutch piston surface (9, 103, 103") which is loadable with a hydraulic force and for the loading of which a connection is formed between the control pressure connection (11) or the common working line connection (134) and the clutch (6) via a feed duct (116.1, 116.2. 116.3) formed in a housing of the hydrostatic piston machine (4) and/or a gearing housing (120', 120").

5. Drive system according to Claim 4,
**characterised**
**in that**, to actuate the clutch (4), there is provided in the feed duct (116.1, 116.2, 116.3) a clutch valve (10, 10'), by which the hydraulic force acting on the clutch piston surface (9, 103, 103', 103'') can be set.

6. Drive system according to Claim 5,
**characterised**
**in that**, via the clutch valve (10, 10'), an actuating duct (14) leading to the clutch piston surface (9, 103) is connected either to the control pressure connection (11) or the common working line connection (134) or to a tank volume (18).

7. Drive system according to Claim 5 or 6,
**characterised**
**in that** the clutch piston surface (9, 103, 103', 103") can be loaded with a hydraulic force via a pneumatic-hydraulic converter (50).

8. Drive system according to Claim 7,
**characterised**
**in that**, to produce the hydraulic force via the pneumatic-hydraulic converter (50), a surface (54) of a converter piston (51) can be loaded with a pneumatic force.

9. Drive system according to Claim 8,
**characterised**
**in that**, to actuate the pneumatic-hydraulic converter (50), there is provided a valve (53), via which the surface (54) of the converter piston (51) can be loaded from a pneumatic pressure source.

10. Drive system according to one of Claims 7 to 9,
**characterised**
**in that** the hydraulic pressure produced in a hydraulic volume (62) by the pneumatic-hydraulic converter (50) can be supplied to the control pressure connection (11) or an inlet connection (130) of the clutch valve (10, 10').

11. Drive system according to one of Claims 1 to 10,
**characterised**
**in that** the second drive shaft (3) is designed as a hollow shaft, which is penetrated by the first drive shaft (2).

12. Drive system according to one of Claims 1 to 11,
**characterised**
**in that** the first drive shaft (2) is a section of a drive train of a vehicle.

13. Drive system according to one of Claims 1 to 12,
**characterised**
**in that** the first drive shaft (2) and the second drive shaft (3) cooperate via gearing stage.

## Revendications

1. Système d'entraînement avec un premier arbre d'entraînement (2) et un tambour à cylindres (86) d'un moteur à piston hydrostatique (4) relié de manière fixe en rotation avec un second arbre d'entraînement (3), le volume de refoulement du moteur à piston hydrostatique (4) pouvant être réglé par le biais d'un dispositif de réglage (5) et le premier arbre d'entraînement (2) pouvant être couplé de manière mécanique au second arbre d'entraînement (3) par le biais d'un accouplement (6),
**caractérisé en ce**
**que**, dans sa position neutre, le moteur à piston hydrostatique (4) est réglé sur un angle de pivotement minimal et
en ce que le dispositif de réglage (5) et l'accouplement (6) peuvent être actionnés de manière hydraulique et sont reliés à un raccord de conduite de travail commun (134) pour l'actionnement.

2. Système d'entraînement selon la revendication 1,
**caractérisé en ce**
**que** le raccord de pression de travail (11) ou le raccord de conduite de travail commun (134) sont réalisés dans une embase de raccordement (72) du moteur à piston hydrostatique (4).

3. Système d'entraînement selon l'une des revendications 1 et 2,
**caractérisé en ce**
**que** l'accouplement (6) est disposé dans un couvercle de carter (70) du moteur à piston hydrostatique (4) ou dans un carter de transmission (120', 120").

4. Système d'entraînement selon l'une des revendications 1 à 3,
**caractérisé en ce**
**que**, pour l'actionnement hydraulique de l'accouplement (6), est prévue une surface de piston d'accouplement (9, 103, 103") pouvant être alimentée avec une force hydraulique et pour l'alimentation de laquelle une liaison est réalisée entre le raccord de pression de travail (11) ou le raccord de conduite de travail commun (134) et l'accouplement (6) par le biais d'un canal d'alimentation (116.1, 116.2, 116.3) formé dans un carter du moteur à piston hydraulique (4) et/ou dans un carter de transmission (120', 120").

5. Système d'entraînement selon la revendication 4,
**caractérisé en ce**
**que**, pour l'actionnement de l'accouplement (6), dans le canal d'alimentation (116.1, 116.2, 116.3), est prévue une vanne d'accouplement (10, 10') au moyen de laquelle la force hydraulique agissant sur la surface de piston d'accouplement (9, 103, 103', 103") peut être réglée.

6. Système d'entraînement selon la revendication 5,
**caractérisé en ce**
**que**, par le biais de la vanne d'accouplement (10, 10'), un canal d'actionnement (14) conduisant à la surface de piston d'accouplement (9, 103) est relié soit au raccord de pression de travail (11) et/ou au raccord de conduite de travail commun (134), soit à un volume de réservoir (18).

7. Système d'entraînement selon la revendication 5 ou 6,
**caractérisé en ce**
**que** la surface de piston d'accouplement (9, 103, 103', 103") peut être alimentée avec une force hydraulique par le biais d'un convertisseur pneumatique-hydraulique (50).

8. Système d'entraînement selon la revendication 7,
**caractérisé en ce**
**que**, pour produire la force hydraulique par le biais du convertisseur pneumatique-hydraulique (50), une surface (54) d'un piston de convertisseur (51) peut être alimentée avec une force pneumatique.

9. Système d'entraînement selon la revendication 8,
**caractérisé en ce**
**que** pour actionner le convertisseur pneumatique-hydraulique (50), est prévue une vanne (53) par le biais de laquelle la surface (54) du piston de convertisseur (51) peut être alimentée à partir d'une source de pression pneumatique.

10. Système d'entraînement selon l'une des revendications 7 à 9,
**caractérisé en ce**
**que** la pression hydraulique produite par le convertisseur pneumatique-hydraulique (50) dans un volume hydraulique (62) peut être conduite au raccord de pression de travail (11) et/ou à un raccord d'entrée (130) de la vanne d'accouplement (10, 10').

11. Système d'entraînement selon l'une des revendications 1 à 10,
**caractérisé en ce**
**que** le second arbre d'entraînement (3) est réalisé sous forme d'un arbre creux qui est traversé par le premier arbre d'entraînement (2).

12. Système d'entraînement selon l'une des revendications 1 à 11,
**caractérisé en ce**
**que** le premier arbre d'entraînement (2) est un tronçon d'une chaîne cinématique d'un véhicule.

13. Système d'entraînement selon l'une des revendications 1 à 12,
**caractérisé en ce**
**que** le premier arbre d'entraînement (2) et le second arbre d'entraînement (3) coopèrent par le biais d'un rapport de démultiplication.
